# EUROPEAN PATENT APPLICATION

(11) **EP 4 582 399 A1**
(43) Date of publication of application: **09.07.2025**
(21) Application number: 23842161.4
(22) Date of filing: 11.07.2023
(51) Int. Cl.: C04B 7/14, C04B 7/38, C04B 14/10, C04B 18/12

(54) **PREPARATION METHOD FOR ACTIVATED KAOLINITE**

(30) Priority: 29.09.2022 CN 202211201678
(71) Applicant: CBMI Construction Co., Ltd., Tangshan, Hebei 064000 (CN); Southwest University of Science and Technology, Mianyang, Sichuan 621010 (CN)
(72) Inventor: LI, Jun, Mianyang, Sichuan 621010 (CN); LI, Runguo, Tangshan, Hebei 064000 (CN); ZENG, Jisheng, Tangshan, Hebei 064000 (CN); HOU, Li, Mianyang, Sichuan 621010 (CN); ZHANG, Chao, Tangshan, Hebei 064000 (CN); ZHENG, Xianming, Tangshan, Hebei 064000 (CN); LU, Zhongyuan, Mianyang, Sichuan 621010 (CN); JIANG, Jun, Mianyang, Sichuan 621010 (CN)
(74) Representative: Maiwald GmbH
(86) International application number: PCT/CN2023/106832
(87) International publication number: WO 2024/017096

(57) **Abstract**

The present disclosure provides a preparation method for an activated kaolinite, which adopts a thermal activation reduction method to obtain the activated kaolinite. Specifically, a prepared raw meal is dried and then thermally decomposed for activation, and after cooling, the activated kaolinite is obtained. The appearance of the activated kaolinite obtained by the present disclosure is greyish black, the activity index is greater than or equal to 90%, and the fluidity ratio of cement mortar is greater than or equal to 95%. The materials used by the present disclosure are all nonmetallic mine tailings or washing wastes, realizing the treatment of tailings into resources and reducing environmental pollution.

## Description

### TECHNICAL FIELD

The present disclosure belongs to the field of material technology, and particularly relates to a preparation method for an activated kaolinite.

### BACKGROUND

Kaolinite is a very important nonmetallic mineral resource, and its raw ore is mainly used in the production of building ceramics or sanitary ceramics. The deep-processed product of kaolinite is metakaolin, which has higher application value in the fields of papermaking, polymers, rubber, functional materials and other fields. Nevertheless, the firing of building ceramics or sanitary ceramics has a strict requirement on the iron content of kaolinite material. If the iron content is too high, leading to the low temperature and large amount of liquid phase in the process of firing, the high glass content and different color of the finished product, and the quality of ceramics will be greatly decreased. Metakaolin with a high iron content will affect the color or functionality (such as insulating property) of downstream products. More seriously, since kaolinite is usually associated with iron-bearing clay minerals, pyrite and hematite, the purification of kaolinite or metakaolin and the separation of iron-bearing minerals are high in cost and complex in process, which leads to the generation and stockpiling of a large quantity of kaolinite tailings.

The cement industry is a big consumer of resources and energy, and its production emits a great deal of CO₂. Statistical data show that the CO₂ emission of the cement industry in China accounts for about 12% of the total carbon emission of the whole society. CO₂ emission mainly comes from limestone decomposition and coal combustion in the process of cement clinker firing, so replacing cement clinker with industrial solid wastes or low-coal consumption low-carbon materials in a large amount is the most direct and effective means to successfully achieve the carbon peaking and carbon neutrality goals in the cement industry. At present, although the technique for preparing cement by replacing cement clinker with industrial solid wastes is already mature, further increasing the amount of industrial solid wastes replacing cement clinker is still limited by the physical and chemical properties of industrial solid wastes themselves, and industrial solid wastes that can replace cement clinker in a large amount are yielded in a small amount and distributed regionally. Therefore, some oversea researchers have proposed a solution wherein a mixture that can replace cement clinker in a large amount could be prepared from activated kaolinite tailings or low-grade kaolinite clay which has a large quantity and is distributed widely. Because the activation temperature of kaolinite is much lower than the firing temperature of cement clinker and the carbonate content in kaolinite is extremely low, the carbon emission in the process of producing activated kaolinite or kaolinite clay is greatly reduced compared with cement clinker. The technique for producing limestone-calcined clay compound cement based on activated kaolinite or kaolinite clay has also been developed accordingly. The content of cement clinker in the cement is only 50%, while the amount of the activated kaolinite or kaolinite clay used is about 30%. The properties of the compound cement reach or exceed those of cement clinker, and compared with the carbon emission of the conventional P.I Portland cement of the same grade, the carbon emission of the compound cement is reduced by more than 40%. However, due to the high iron content of kaolinite tailings or low-grade kaolinite clay, the activated kaolinite or kaolinite clay produced by the conventional activation process is generally brick-red, and the color of the compound cement produced by replacing the cement clinker with the activated kaolinite or kaolinite clay in a large amount is also dark red. In addition, because the mineral morphology in the activated kaolinite or kaolinite clay retains the layered structure of kaolinite or clay mineral, the water absorption is too high, the compound cement produced by replacing the cement clinker with the activated kaolinite or kaolinite clay in a large amount has poor workability, and the fluidity ratio of cement mortar is low.

Due to the aforementioned problems, the compound cement, produced by replacing the cement clinker with the activated kaolinite or kaolinite clay in a large amount, has a significant change in color and has s significant decrease in workability, so it is difficult for the compound cement to be accepted by users. In addition, because kaolinite tailings or low-grade kaolinite clay almost contain no calorific value, its activation process mainly depends on external fuel for heating, which also leads to the high consumption of mineral fuel in its activation process.

In view of this, it is necessary to develop an activated kaolinite with good workability and a preparation method thereof, so as to realize the utilization of waste tailings as a resource, reduce the emission of CO₂ and other pollution gases in the production process of the cement industry and reduce energy consumption.

### SUMMARY

In view of the technical problems existing in the prior art, the objective of the present disclosure is to provide a preparation method for an activated kaolinite. According to the present disclosure, under the premise of not adopting an iron component separation and extraction process and not decreasing the activity of the activated kaolinite, most of the activation heat is supplied by introducing graphite tailings and coal slime with calorific values as nonmetallic ore wastes, the content of layered products with high water absorption is adjusted by the burnt-out graphite tailings ash, and the valence state of iron ions is changed by a reduction process, so as to adjust the color of the product.

The objective of the present disclosure is achieved by the following technical solution:
The preparation method for an activated kaolinite comprises the following steps:
(1) Crushed raw materials, including kaolinite tailings, graphite tailings and coal slime, are taken in percentage by mass respectively and homogeneously mixed to prepare a raw meal;
(2) The raw meal is spread on a distribution belt to form a raw meal layer, which is conveyed into a multi-section tunnel kiln and preheated for drying in a drying section of the tunnel kiln;
(3) The distribution belt is conveyed from the drying section of the tunnel kiln to a decomposition section of the tunnel kiln, the temperature of the decomposition section is controlled at 750°C± 50°C, and the material residence time is 40 to 80 minutes;
(4) The distribution belt is conveyed from the decomposition section of the tunnel kiln to a reduction section of the tunnel kiln, the reduction section is hermetically closed, water mist is sprayed into the reduction section, so that the high-temperature material is heat-stewed in a reducing atmosphere containing saturated steam, and the material conveyed out of the reduction section of the tunnel kiln is quickly air-cooled, thus obtain the activated kaolinite.

The present disclosure adopts a heat-stewing reduction method to turn the activated kaolinite from conventional red into greyish black, which greatly increases the acceptance of the activated kaolinite by users. In a high-temperature environment with sufficient oxygen, the iron-bearing mineral is decomposed or burnt to produce red hematite with high valence state (Fe₂O₃). By adopting the method according to the present disclosure, the material is conveyed into the reduction section of the tunnel kiln through the decomposition section, the reduction section is hermetically closed and water mist is sprayed thereinto. As a result, firstly, the water is converted into water vapor at high temperature, so that the reduction section is in a positive pressure state to prevent the infiltration of external oxygen, and thereby the reduction section is in an oxygen deficient state; and secondly, the water vapor reacts with unburned carbon at high temperature: C+H₂O = CO+H₂, so the reduction section has a reducing atmosphere. The following reduction reactions occur in the reduction section:

3Fe₂O₃+C = 2Fe₃O₄+CO

Fe₃O₄+C = 3FeO+CO

3Fe₂O₃+CO = 2Fe₃O₄+CO₂

Fe₃O₄+CO = 3FeO+CO

3Fe₂O₃+H₂ = 2Fe₃O₄+H₂O

Fe₃O₄+H₂ = 3FeO+H₂O

It can be seen that after the heat-stewing process, the whole reduction section presents a weak reducing atmosphere, and red Fe₂O₃ in the activated kaolinite is transformed into black Fe₃O₄ and dark green FeO minerals (metallic iron can hardly be reduced out under a low-temperature weak reducing condition), so that the activated kaolinite has a greyish black color which is distinguish from that of the conventional activated kaolinite. The change of color will greatly increase the acceptance of the activated kaolinite by users.

Further, the particle size of raw materials is <5 mm.

Further, the raw meal comprises 60% to 80% of kaolinite tailings, 15% to 30% of graphite tailings and 5% to 10% of coal slime.

Further, the kaolinite tailings are the mining and beneficiation waste of a ceramic material mine.

In the kaolinite tailings, the mass percentage content of kaolinite ≥75%, the mass percentage content of hematite ≥5% and the mass percentage content of quartz ≤10%.

Further, the loss on ignition of the kaolinite tailings is 10% to 12%.

The kaolinite mineral in the kaolinite tailings is thermally dehydrated and decomposed to produce amorphous silica and alumina: Al₂Si₂O₅(OH)₄ (kaolinite) = Al₂O₃+2SiO₂+2H₂O↑, realizing dehydroxylation activation, which is the reason why the high pozzolanic activity of the activated kaolinite is generated. However, the activated product still retains the layered structure of the kaolinite mineral, which brings about the problems of high water absorption and poor workability of prepared cement. According to the present disclosure, the content of the layered mineral is diluted by introducing the high-silicon graphite tailings and the silica in the graphite tailings tends to become amorphous at high temperature, so the problem of water absorption of activated kaolinite is solved under the premise of not decreasing the activity of the activated kaolinite.

Further, the graphite tailings are the mining and beneficiation waste of a graphite mine; and
further, in the graphite tailings, the mass percentage content of quartz ≥70% and the mass percentage content of residual graphite is 3% to 5%.

Further, the loss on ignition of the graphite tailings is 8% to 10%, and the calorific value is 1.0 to 1.6 MJ/kg.

Further, the coal slime is coal washing waste; and
further, in the coal slime, the water content ≤ 12%, the ash content ≥55%, and the calorific value is 3.0 to 6.0 MJ/kg.

In the drying section of the tunnel kiln according to the present disclosure, the heat comes from the hot air extracted from the decomposition section of the tunnel kiln and the hot air extracted in the process of material cooling; and the hot air extracted from the decomposition section of the tunnel kiln can be recycled.

Another important objective of the present disclosure is to provide a material for concrete, which comprises the activated kaolinite obtained by adopting the aforementioned preparation method. For example, the activated kaolinite according to the present disclosure can be mixed with cement clinker, gypsum and other building materials and ground together to prepare various general-purpose Portland cements of different grades, or can be ground separately to prepare a mineral admixture for concrete.

The present disclosure has the following beneficial effects:
(1) The raw materials used by the present disclosure, i.e. the kaolinite tailings, the graphite tailings and the coal slime, are all mining and beneficiation wastes of nonmetallic ores, and a feasible modification technique and means is provided for the kaolinite tailings, the graphite tailings and the coal slime which are difficult to be utilized, and it is expected to greatly increase the value and comprehensive utilization rate of the nonmetallic ore tailings; and moreover, both the carbonate content in the material and CO₂ generated by carbonate decomposition in the process of activation are extremely low, which conforms to the green and low-carbon concept.
(2) The present disclosure makes full use of the residual calorific value of the graphite tailings and the coal slime, greatly reducing the demand on external fuel and solving the problem on how to comprehensively utilize the graphite tailings and the coal slime. Moreover, because the burnt-out graphite tailings ash is siliceous and the coal slime ash is salic similar to calcined clay, both the burnt-out products have no negative effect on the activated product of the kaolinite tailings.
(3) The present disclosure solves the problem of high water absorption of activated kaolinite under the premise of not decreasing the activity of the activated kaolinite, so that the water absorption is decreased while the activity of the activated kaolinite is not decreased, and the color is turned into greyish black more acceptable in the field of building materials, which will further increase the application value and usage of the activated kaolinite in the field of building materials such as cement; and with the greyish black appearance, high activity and good fluidity, the resulting activated kaolinite can replace cement clinker in a large amount in the production of cement or be directly produced into a mineral admixture for concrete.
(4) The demand on external fuel in the process of processing the activated kaolinite according to the present disclosure is little, the CO₂ emission during activation is extremely low, the activated kaolinite can be used to replace cement clinker in a large amount without changing cement texture and decreasing cement properties, and therefore it is a green and low-carbon technique suitable for the cement industry.

### DESCRIPTION OF EMBODIMENTS

The present disclosure will be further illustrated in detail with reference to the following specific examples. Unless otherwise specified, the raw materials and equipment used in present disclosure are conventional materials and equipment in the art.

### Example 1

(1) All the raw materials are pre-crushed to a particle size less than 5 mm respectively;
(2) The crushed materials, including 60% of kaolinite tailings, 30% of graphite tailings and 10% of coal slime, are taken in percentage by mass respectively and homogeneously mixed to prepare a raw meal;
(3) The raw meal is spread on a distribution belt to form a raw meal layer, which is conveyed into a multi-section tunnel kiln and preheated for drying in a drying section of the tunnel kiln;
(4) The distribution belt is conveyed from the drying section of the tunnel kiln to a decomposition section of the tunnel kiln, the temperature of the decomposition section is controlled at 750°C± 50°C, and the material residence time is 60 minutes;
(5) The distribution belt is conveyed from the decomposition section of the tunnel kiln to a reduction section of the tunnel kiln, the reduction section is hermetically closed, and water mist is sprayed into the reduction section, so that the high-temperature material is heat-stewed in a reducing atmosphere containing saturated steam for 60 minutes;
(6) The material conveyed out of the reduction section of the tunnel kiln is quickly air-cooled to below 100°C, thus obtain the activated kaolinite.

### Example 2

(1) All the raw materials are pre-crushed to a particle size less than 5 mm respectively;
(2) The crushed materials, including 65% of kaolinite tailings, 28% of graphite tailings and 7% of coal slime, are taken in percentage by mass respectively and homogeneously mixed to prepare a raw meal;
(3) The raw meal is spread on the distribution belt to form a raw meal layer, which is conveyed into the multi-section tunnel kiln and preheated for drying in the drying section of the tunnel kiln;
(4) The distribution belt is conveyed from the drying section of the tunnel kiln to the decomposition section of the tunnel kiln, the temperature of the decomposition section is controlled at 750°C± 50°C, and the material residence time is 60 minutes;
(5) The distribution belt is conveyed from the decomposition section of the tunnel kiln to the reduction section of the tunnel kiln, the reduction section is hermetically closed, and water mist is sprayed into the reduction section, so that the high-temperature material is heat-stewed in a reducing atmosphere containing saturated steam for 60 minutes;
(6) The material conveyed out of the reduction section of the tunnel kiln is quickly air-cooled to below 100°C, thus obtain the activated kaolinite.

### Example 3

(1) All the raw materials are respectively pre-crushed to a particle size less than 5 mm;
(2) The crushed materials, including 70% of kaolinite tailings, 25% of graphite tailings and 5% of coal slime, are taken in percentage by mass respectively and homogeneously mixed to prepare a raw meal;
(3) The raw meal is spread on the distribution belt to form a raw meal layer, which is conveyed into the multi-section tunnel kiln and preheated for drying in the drying section of the tunnel kiln;
(4) The distribution belt is conveyed from the drying section of the tunnel kiln to the decomposition section of the tunnel kiln, the temperature of the decomposition section is controlled at 750°C± 50°C, and the material residence time is 60 minutes;
(5) The distribution belt is conveyed from the decomposition section of the tunnel kiln to the reduction section of the tunnel kiln, the reduction section is hermetically closed, and water mist is sprayed into the reduction section, so that the high-temperature material is heat-stewed in a reducing atmosphere containing saturated steam for 60 minutes;
(6) The material conveyed out of the reduction section of the tunnel kiln is quickly air-cooled to below 100°C, thus obtain the activated kaolinite.

### Example 4

(1) All the raw materials are pre-crushed to a particle size less than 5 mm respectively;
(2) The crushed materials, including 70% of kaolinite tailings, 20% of graphite tailings and 10% of coal slime, are taken in percentage by mass respectively and homogeneously mixed to prepare a raw meal;
(3) The raw meal is spread on a distribution belt to form a raw meal layer, which is conveyed into a multi-section tunnel kiln and preheated for drying in a drying section of the tunnel kiln;
(4) The distribution belt is conveyed from the drying section of the tunnel kiln to a decomposition section of the tunnel kiln, the temperature of the decomposition section is controlled at 750°C± 50°C, and the material residence time is 60 minutes;
(5) The distribution belt is conveyed from the decomposition section of the tunnel kiln to a reduction section of the tunnel kiln, the reduction section is hermetically closed, and water mist is sprayed into the reduction section, so that the high-temperature material is heat-stewed in a reducing atmosphere containing saturated steam for 60 minutes;
(6) The material conveyed out of the reduction section of the tunnel kiln is quickly air-cooled to below 100°C, thus obtain the activated kaolinite.

### Example 5

(1) All the raw materials are pre-crushed to a particle size less than 5 mm respectively;
(2) The crushed materials, including 75% of kaolinite tailings, 18% of graphite tailings and 7% of coal slime, are taken in percentage by mass respectively and homogeneously mixed to prepare a raw meal;
(3) The raw meal is spread on a distribution belt to form a raw meal layer, which is conveyed into a multi-section tunnel kiln and preheated for drying in a drying section of the tunnel kiln;
(4) The distribution belt is conveyed from the drying section of the tunnel kiln to a decomposition section of the tunnel kiln, the temperature of the decomposition section is controlled at 750°C± 50°C, and the material residence time is 60 minutes;
(5) The distribution belt is conveyed from the decomposition section of the tunnel kiln to a reduction section of the tunnel kiln, the reduction section is hermetically closed, and water mist is sprayed into the reduction section, so that the high-temperature material is heat-stewed in a reducing atmosphere containing saturated steam for 60 minutes;
(6) The material conveyed out of the reduction section of the tunnel kiln is quickly air-cooled to below 100°C, thus obtain the activated kaolinite.

### Example 6

(1) All the raw materials are pre-crushed to a particle size less than 5 mm respectively;
(2) The crushed materials, including 80% of kaolinite tailings, 15% of graphite tailings and 5% of coal slime, are taken in percentage by mass respectively and homogeneously mixed to prepare a raw meal;
(3) The raw meal is spread on a distribution belt to form a raw meal layer, which is conveyed into a multi-section tunnel kiln and preheated for drying in a drying section of the tunnel kiln;
(4) The distribution belt is conveyed from the drying section of the tunnel kiln to a decomposition section of the tunnel kiln, the temperature of the decomposition section is controlled at 750°C± 50°C, and the material residence time is 60 minutes;
(5) The distribution belt is conveyed from the decomposition section of the tunnel kiln to a reduction section of the tunnel kiln, the reduction section is hermetically closed, and water mist is sprayed into the reduction section, so that the high-temperature material is heat-stewed in a reducing atmosphere containing saturated steam for 60 minutes;
(6) The material conveyed out of the reduction section of the tunnel kiln is quickly air-cooled to below 100°C, thus obtain the activated kaolinite.

Table 1 shows the composition ratios of the raw meals in Examples 1 to 6. In order to illustrate the beneficial effects of the present disclosure, the raw materials in Comparative Examples 1 to 6 are proportioned according to the ratios of the raw meals in Examples 1 to 6, but the activated materials in the decomposition section of the tunnel kiln do not enter the reduction section of the tunnel kiln, and the materials leaving the decomposition section of the tunnel kiln are directly and quickly air-cooled to below 100°C, that is, they were directly air-cooled without entering the reduction section.

**Table 1**

| Example | Activation method | Composition of real meal in percentage by mass (%) | | |
|---|---|---|---|---|
| | | Kaolinite tailings | Graphite tailings | Coal slime |
| Example 1 | the method according to the present disclosure | 60 | 30 | 10 |
| Example 2 | the method according to the present disclosure | 65 | 28 | 7 |
| Example 3 | the method according to the present disclosure | 70 | 25 | 5 |
| Example 4 | the method according to the present disclosure | 70 | 20 | 10 |
| Example 5 | the method according to the present disclosure | 75 | 18 | 7 |
| Example 6 | the method according to the present disclosure | 80 | 15 | 5 |
| Comparative Example 1 | directly air-cooled without entering the reduction section | 60 | 30 | 10 |
| Comparative Example 2 | directly air-cooled without entering the reduction section | 65 | 28 | 7 |
| Comparative Example 3 | directly air-cooled without entering the reduction section | 70 | 25 | 5 |
| Comparative Example 4 | directly air-cooled without entering the reduction section | 70 | 20 | 10 |
| Comparative Example 5 | directly air-cooled without entering the reduction section | 75 | 18 | 7 |
| Comparative Example 6 | directly air-cooled without entering the reduction section | 80 | 15 | 5 |

The activated kaolinites prepared according to the methods of Examples 1 to 6 and Comparative Examples 1 to 6 were ground into 45 µm powders with 8% or less of residue on sieve respectively, and the apparent colors of the powders were observed. The 28-day compressive strength ratios of cement mortars made from the activated kaolinites were tested according to Chinese National Standard GB/T 2847 "Pozzolanic Materials Used for Cement Production", and the fluidity ratios of the cement mortars made from the activated kaolinites were tested according to Chinese industry standard JG/T 486 "Compound Mineral Admixtures for Concrete". The test results are shown in Table 2.

**Table 2**

| Test Example | Apparent color | Fluidity ratio of cement mortar/% | 28-day compressive strength ratio of |
|---|---|---|---|
| Example 1 | greyish black | 101 | 93 |
| Example 2 | greyish black | 99 | 95 |
| Example 3 | greyish black | 99 | 98 |
| Example 4 | greyish black | 98 | 98 |
| Example 5 | greyish black | 98 | 100 |
| Example 6 | greyish black | 96 | 105 |
| Comparative Example 1 | light red | 95 | 89 |
| Comparative Example 2 | light red | 94 | 89 |
| Comparative Example 3 | brown | 92 | 93 |
| Comparative Example 4 | brown | 92 | 92 |
| Comparative Example 5 | red | 90 | 94 |
| Comparative Example 6 | red | 88 | 95 |

It can be seen from the above data that the apparent colors of the activated kaolinites prepared by the examples of the present disclosure are all greyish black, the fluidity ratios of the cement mortars are greater than 95%, and the 28-day compressive strength ratios of the cement mortars are greater than 90%. However, the activated kaolinites prepared by the comparative examples were not reduced by heat-stewing in the reduction section, so their appearance color changed from light red into brown and then into red. In addition, both the fluidity ratios and 28-day compressive strength ratios of the cement mortars made from the activated kaolinites prepared by the comparative examples compared with those of the examples with the same ratio are greatly decreased.

Although the present disclosure has been described above with reference to the illustrative examples, it should be understood by those skilled in the art that various modifications and changes can be made to the illustrative examples of the present disclosure without departing from the spirit and scope defined by the claims.

## Claims

1. A preparation method for an activated kaolinite, **characterized in that**, comprising the following steps:
(1) crushed raw materials, including kaolinite tailings, graphite tailings and coal slime, are taken in percentage by mass respectively and homogeneously mixed to prepare a raw meal;
(2) the raw meal is spread on a distribution belt to form a raw meal layer, which is conveyed into a multi-section tunnel kiln and preheated for drying in a drying section of the tunnel kiln;
(3) the distribution belt is conveyed from the drying section of the tunnel kiln to a decomposition section of the tunnel kiln, the temperature of the decomposition section is controlled at 750°C± 50°C, and the material residence time is 40 to 80 minutes;
(4) the distribution belt is conveyed from the decomposition section of the tunnel kiln to a reduction section of the tunnel kiln, the reduction section is hermetically closed, water mist is sprayed into the reduction section, so that the high-temperature material is heat-stewed in a reducing atmosphere containing saturated steam, and the material conveyed out of the reduction section of the tunnel kiln is quickly air-cooled, thus obtain the activated kaolinite.

2. The preparation method for an activated kaolinite according to claim 1, **characterized in that**, the particle sizes of the raw materials are less than 5 mm.

3. The preparation method for an activated kaolinite according to claim 1, **characterized in that**, the raw meal comprises 60% to 80% of kaolinite tailings, 15% to 30% of graphite tailings and 5% to 10% of coal slime.

4. The preparation method for an activated kaolinite according to claim 1, **characterized in that**, the kaolinite tailings are the mining and beneficiation waste of a ceramic material mine.

5. The preparation method for an activated kaolinite according to claim 1, **characterized in that**, in the kaolinite tailings, the mass percentage content of kaolinite ≥ 75%, the mass percentage content of hematite ≥5% and the mass percentage content of quartz ≤10%.

6. The preparation method for an activated kaolinite according to claim 4, **characterized in that**, the loss on ignition of the kaolinite tailings is 10% to 12%.

7. The preparation method for an activated kaolinite according to claim 1, **characterized in that**, the graphite tailings are the mining and beneficiation waste of a graphite mine; and
further, in the graphite tailings, the mass percentage content of quartz ≥70% and the mass percentage content of residual graphite is 3% to 5%..

8. The preparation method for an activated kaolinite according to claim 1, **characterized in that**, the loss on ignition of the graphite tailings is 8% to 10%, and the calorific value is 1.0 to 1.6 MJ/kg.

9. The preparation method for an activated kaolinite according to claim 1, **characterized in that**, the coal slime is coal washing waste; and
further, in the coal slime, the water content ≤12%, the ash content ≥55%, and the calorific value is 3.0 to 6.0 MJ/kg.

10. A material for concrete, **characterized in that**, comprising the activated kaolinite prepared by the preparation method according to any of claims 1 to 9.
